# EUROPÄISCHE PATENTANMELDUNG

(11) **EP 2 362 077 A2**
(43) Veröffentlichungstag der Anmeldung: **31.08.2011**
(21) Anmeldenummer: 11001203.6
(22) Anmeldetag: 15.02.2011
(51) Int. Cl.: F02B 19/12

(54) **Brennkraftmaschine**

(30) Priorität: 22.02.2010 AT 932010 U; 25.03.2010 AT 1952010 U
(71) Anmelder: GE Jenbacher GmbH & Co OHG, 6200 Jenbach (AT)
(72) Erfinder: Laiminger, Stephan, 6322 Kirchbichl (AT); Soman, Ravindra, Bangalore 560037 Karnataka (IN); Raman, Venkatesh, Bangalore 560076 Karnataka (IN)
(74) Vertreter: Gangl, Markus

(57) **Zusammenfassung**

Funkengezündeter Verbrennungsmotor (1), der Folgendes umfasst:
• mindestens eine Vorkammer (2), die mit einer Funkenquelle (4) versehen ist,
• mindestens einen Hauptbrennraum (3), der mit der mindestens einen Vorkammer (2) verbunden ist,
• eine erste Kraftstoffleitung (5), welche die mindestens eine Vorkammer (2) mit einer Quelle eines fetten Kraftstoff-Luft-Gemisches oder reinen Kraftstoffs verbindet,

wobei eine zweite Kraftstoffleitung (6) vorhanden ist, welche die mindestens eine Vorkammer (2) mit einer Quelle eines mageren Kraftstoff-Luft-Gemisches verbindet, wobei die Verbindung der ersten und der zweiten Kraftstoffleitung (5, 6) mit der mindestens einen Vorkammer (2) über eine Mischvorrichtung (7) zum Mischen des mageren Kraftstoff-Luft-Gemisches und des fetten Kraftstoff-Luft-Gemisches bzw. des reinen Kraftstoffs erfolgt, wobei die Mischvorrichtung (7) eine Venturi-Düse umfasst, wobei ein konvergenter Abschnitt (8) der Venturi-Düse mit der zweiten Kraftstoffleitung (6) verbunden ist, wobei ein Verengungsabschnitt (9) der Venturi-Düse mit der ersten Kraftstoffleitung (5), vorzugsweise über mehrere in dem Verengungsabschnitt (9) angeordnete Löcher (10), verbunden ist und ein divergenter Abschnitt (11) der Venturi-Düse mit der Vorkammer (2) verbunden ist.

## Beschreibung

Diese Erfindung betrifft einen funkengezündeten Verbrennungsmotor gemäß dem Oberbegriff von Anspruch 1.

Die Sättigung eines Kraftstoff-Luft-Gemisches kann mit dem Wert Lambda beschrieben werden. Lambda bezieht sich auf das Verhältnis zwischen der tatsächlichen Masse von Luft zur Masse von Kraftstoff, und auch das stoichiometrische Verhältnis des Gemisches verändert sich parabolisch. Das heißt, wenn Lambda = 1 ist, so bedeutet das, dass die Gemischzufuhr exakt so bemessen ist, dass der Kraftstoff vollständig verbrennt (stoichiometrisch). Wenn Lambda größer als 1 ist, so bedeutet das, dass sich mehr Luft im Gemisch befindet, als zur vollständigen Verbrennung benötigt wird (Magergemisch). Wenn hingegen Lambda kleiner als 1 ist, so wird Luft weit unterhalb des stoichiometrischen Verhältnisses zum Verbrennen des Kraftstoffs zugeführt (fettes Gemisch).

In der Regel sind große funkengezündete Verbrennungsmotoren mit einer Vorkammer ausgestattet. Der Hauptbrennraum nimmt ein mageres Kraftstoff-Luft-Gemisch auf, und eine kleine Vorkammer dient zum Entzünden eines sehr fetten Gemisches aus (mindestens nahezu) reinem Kraftstoff mit Hilfe einer Funkenquelle, welches dann wiederum das Magergemisch im Hauptbrennraum zündet und verbrennt.

Das fette Gemisch, das in die Vorkammer einströmt, bildet mitunter Ruß (unverbrannter Kohlenwasserstoff), da nicht genügend Sauerstoff zur Verfügung steht. Die entscheidende Ursache dieses Problems ist, dass ein sehr fettes Gemisch oder reiner Kraftstoff in die Vorkammer strömt. Außerdem gibt es nicht genügend Sauerstoff für eine ordnungsgemäße Verbrennung im Inneren der Vorkammer. Auch wenn es ausdrücklich gewollt ist, ein fettes Gemisch in der Vorkammer zu haben, ist es doch unerwünscht, dass sich Ruß in der Vorkammer bildet. Denn Ruß erhöht den Schadstoffausstoß des Motors, was ganz und gar nicht im Interesse der Kunden ist.

Diese Rußbildung kann verringert werden, indem man weniger reinen Kraftstoff in die Vorkammer strömen lässt. Aber dadurch wird die Flammausbreitung von der Vorkammer zum Hauptbrennraum beeinträchtigt, was zu einer verzögerten Zündung führen kann, wodurch sich wiederum die Verbrennung des Magergemisches verschlechtert. Die Folge kann eine erheblich verminderte Motorleistung sein.

Des Weiteren ist die Vorkammer auf einen bestimmten optimalen Volumenstrom ausgelegt, so dass sich ein verringerter Volumenstrom erheblich auf die Verbrennung, genauer gesagt: die Flammausbreitung, auswirken kann. Dadurch kann sich die Zündung verzögern, und die Motorleistung kann insgesamt sinken.

Ein weiterer signifikanter Nachteil ist die Rußablagerung in der Vorkammer, wodurch praktisch das kleine Vorkammervolumen mit Ruß ausgefüllt wird. Diese Volumenverkleinerung verringert die Kraftstoffmenge, die in der Vorkammer aufgenommen werden kann, was wiederum zu Problemen mit einer unzureichenden Verbrennung, Leistungsverlust und erhöhtem Schadstoffanteil im Abgas führt.

Es ist eine Aufgabe der Erfindung, die Rußbildung in der Vorkammer zu reduzieren.

Diese Aufgabe wird durch einen Verbrennungsmotor nach Anspruch 1 erfüllt.

Ein mageres Kraftstoff-Luft-Gemisch im Sinne der Erfindung kann durch einen Lambda-Bereich von etwa 1,5 bis 2,5 beschrieben werden; ein sehr fettes Kraftstoff-Luft-Gemisch kann durch einen Lambda-Bereich von etwa 0,1 bis 1,2 beschrieben werden.

Das fette Gemisch kann beispielsweise einen Lambda-Wert von 0,9 haben.

Das magere Gemisch kann beispielsweise einen Lambda-Wert von 1,9 haben.

Untersuchungen auf dem Prüfstand zeigen, dass die Rußbildung in der Vorkammer um fast 50 % verringert werden kann. Eine nur geringfügige Änderung der Anordnung der Kraftstoffleitungen am Motor kann helfen, strengere Schadstoffnormen zu erfüllen oder einzuhalten.

Da die Erfindung auch das Variieren der Sättigung des Gemisches (des Verhältnisses von Kraftstoff zu Luft) ermöglicht, kann sie zum Simulieren des Motorbetriebes mit unterschiedlichen Kraftstoffarten, Kraftstoffgemischen und Verhältnissen verwendet werden, wodurch die Zeit zum Testen eines neuen Motors mit einem anderen Kraftstoff usw. verkürzt werden kann.

Des Weiteren haben die Kunden den Nutzen eines weniger schadstofftaelasteten Abgases. Die Motorabgase werden häufig als Wärme- und CO₂-Quelle zur Pflanzenzucht, insbesondere zur Blumenzucht, verwendet, indem das Abgas in einem Treibhaus aufgefangen wird. Wenn das Abgas Ruß enthält, so gelangt der Ruß ebenfalls in das Treibhaus, was in keiner Weise erwünscht ist, weil er das Wachstum von Blumen und anderen Pflanzen hemmt. Durch Verringern des Rußgehalts der Motorabgase lässt sich ein besserer und weniger schadstoffbelasteter Treibhauseffekt für Blumengärtnereien erreichen, in denen Motorabgase zum Erzeugen eines Treibhauseffekts zur Förderung des Blumenwachstums in einer kontrollierten Umgebung verwendet werden. Die Erfindung hilft auch bei der Einhaltung strenger Emissionsnormen und unterstützt das Bemühen um eine grünere Umwelt.

### Weitere Vorteile:

Kosteneinsparungen bei der Abgasreinigung: Die Erfindung hilft bei der Senkung der Kosten für die Reinigung des Abgases und bei der Verringerung der Auswirkung der Abgase auf die Produkte, die von dem Abgas des Motors abhängig sind. Sie mindert auch die Notwendigkeit des Einsatzes teurer Abgasreinigungsanlagen.

Kosteneinsparungen bei Wartung und Stillstandszeiten: Abgesehen von den Kosten für die Abgasreinigung können die anderen möglichen Optionen zur Rußminderung auch Auswirkungen auf den Ersatz vieler verschiedener Teile haben, wo anderenfalls eine regelmäßige Reinigung der Vorkammern erforderlich wäre.

Die regelmäßige Reinigung von Vorkammern war nur bei still stehendem Motor möglich, da die Reinigung das Abnehmen der Vorkammer von den Zylinderköpfen erforderlich machen kann, was arbeitsintensiv und mühevoll ist. Darüber hinaus muss diese Arbeit beim Kunden ausgeführt werden.

Mit Hilfe der Erfindung können die Wartungskosten und ebenso die Stillstandszeiten von Motoren für den Kunden drastisch verringert werden.

Weitere Ausführungsformen der Erfindung sind in den abhängigen Ansprüchen definiert.

Die Erfindung nutzt im Grunde die Druckdifferenz und das Bernouill-Prinzip. Die Idee betrifft das Mischen zweier Gase in einer Konvergent-Gerade-Divergent (KGD)-Düse (Venturi-Düse). Die Venturi-Düse hat einen konvergenten, einen geraden (im Verengungsabschnitt) und einen divergenten Abschnitt für die Strömung des Magergemisches. Vorzugsweise wird das fette Gemisch in der benötigten Proportion mit Hilfe von Kraftstoffzufuhrlöchem, die um den gesamten Verengungsabschnitt (geraden Abschnitt) herum angeordnet sind, vermischt Durch Variieren der Druckdifferenz zwischen dem reinen Kraftstoff und dem Magergemisch kann die Proportion oder das Gemischverhältnis gesteuert werden. Das fertige Gemisch wird durch Schläuche und Verbinder in die Vorkammern aller Zylinderköpfe geleitet, wodurch die Rußemissionen um bis zu 50 % gemindert werden. Die Magergemischströmung durch die Düse erzeugt einen Druckabfall in der Verengung, in deren Umfang sich gleichmäßig beabstandete radiale Löcher befinden. Dieser Druckabfall unterstützt im Grunde das Strömen oder Ansaugen von reinem Kraftstoff und somit das Vermischen der Gase in dem divergenten Abschnitt und im übrigen Teil des Kraftstoffströmungsweges.

Da die Düsengeometrie immer gleich bleibt, verändert sich auch das Gemischverhältnis der Gase kaum, sofern auch die anderen Parameter gleich bleiben.

Um das Gemischverhältnis zu verändern, kann die Druckdifferenz zwischen den zwei Gasströmen variiert werden.

Wenn sich die Motordrehzahl oder die Motorlast erhöht, so steigt die in den Motor gesaugte Luftmenge und damit die Menge des Magergemisches. Aufgrund des Anstiegs der Strömungsrate ist vorzugsweise darauf zu achten, dass der Zuleitungsdruck des reinen Kraftstoffs ebenfalls entsprechend variiert wird. Geschieht das nicht, so könnte sich das auf die Sättigung des Gemisches auswirken, das in die Vorkammer strömt.

Somit kann ein Steuerkreis oder ein Regelkreis verwendet werden, der gewährleistet, dass die Druckdifferenz zwischen den zwei Strömungen so gesteuert wird, dass die Sättigung des Vorkammergemisches gleich bleibt.

In dieser Ausführungsform muss während der Anfahrzeit, d. h. wenn die Motorlast erhöht wird (wie zum Beispiel während des Beschleunigens), der Anteil des Kraftstoffs im Vorkammergemisch erhöht werden. Das System muss also gewährleisten, dass die Druckdifferenz so variiert wird, dass eine größere Menge Kraftstoff eingemischt wird.

Wird die Gemischautbereitungsvorrichtung an einer Stelle direkt hinter einem Ladeluftkühler (Turbobypass) angeordnet, so kann der Druckabfall des zur Düse gelangenden Magergemisches verringert werden. Das kann von entscheidender Bedeutung sein, denn je stärker der Druck abfällt, desto geringer ist die potenzielle Druckdifferenz, die zwischen den zwei Strömungen möglich ist, wodurch die zwei Gase unzureichend vermischt werden.

Die Konvergent-Gerade-Divergent-Düse kann in einem Gehäuse angeordnet sein, in dem die Konvergent-Gerade-Divergent-Düse gut gesichert ist und vollständig in ihrer Position gehalten wird. Das Gehäuse kann dafür genutzt werden, das dem Motor zugeleitete reine Gas in einen um die Düse herum ausgebildeten Ringraum zu leiten, insbesondere in dem geraden Abschnitt oder der Verengung der Düse, wo vorzugsweise radiale Löcher entlang des Umfangs (360°) in gleichmäßigem Abstand angeordnet sind, um ein ordnungsgemäßes Vermischen zu ermöglichen.

Entlang der ringförmigen Region kann eine geeignete Abdichtung vorgenommen werden, damit keine Gase austreten können. Außerdem hilft das Gehäuse beim Auffangen des Gasgemisches (Gemisch aus reinem Kraftstoff und Magergemisch) von der Düse und leitet es überdies zu einem T-Stück, das die Gase schließlich über Schläuche und Rohrleitungen in die Vorkammer schickt.

Die Dimensionierung der Düse sowie der Rohrleitungen und Schläuche ist von der Strömungsgeschwindigkeit der Gase abhängig. Es sollte gewährleistet sein, dass die Strömungsgeschwindigkeit unter Mach 1 (Schallgeschwindigkeit) liegt, damit sich die Wirkung der Konvergent-Gerade-Divergent-Düse nicht umkehrt. Die benötigte Dimensionierung lässt sich experimentell ermitteln.

Im Folgenden sind einige Beispiele zur Auswirkung unterschiedlicher Varianten des Zuleitungsdrucks des reinen Kraftstoffs auf das Vorkammer-Kraftstoffgemisch gezeigt.

Fall 1: Wenn der Zuleitungsdruck des reinen Kraftstoffs (oder eines sehr fetten Gemisches) konstant bleibt.
- Der Druck des Auslassstromes (des Gemisches) variiert im Gleichtakt mit dem Eingangsdruck des vom Ladeluftkühler heranströmenden Magergemisches.
- Die Sättigung des Gemisches (Mischungsverhältnis von reinem Gas und dem Magergemisch nach dem Ladeluftkühler) verändert sich parabolisch im Vergleich zum Verlauf des Eingangsdruck des Magergemisches, das von hinter dem Ladeluftkühler heranströmt. Damit verändert sich auch der Lambda-Wert parabolisch.
- Der Lambda-Wert verringert sich (<1, geht in einem negativen Verlauf in Richtung 0) in dem Maße, wie der Kraftstoffdruck des Magergemisches nach dem Ladeluftkühler abnimmt. Somit kann bei niedrigeren Drehzahlen oder Lasten fettes Gemisch in den Brennraum gelangen, was unerwünscht ist.

Fall 2: Wenn die Zufuhr des reinen Kraftstoffs (oder eines sehr fetten Gemisches) eine konstante Druckdifferenz relativ zum Magergasdruck beibehält.
- Der Druck des Auslassstromes (des Gemisches) variiert im Gleichtakt linear mit dem Eingangsdruck des von hinter dem Ladeluftkühler heranströmenden Magergemisches.
- Die Sättigung des Gemisches (Gemischverhältnis von reinem Gas und dem Magergemisch nach dem Ladeluftkühler) bleibt konstant, wenn der Gaszuleitungsdruck gemäß dem Verlauf des Eingangsdrucks des von hinter dem Ladeluftkühler heranströmenden Magergemisches verändert wird. Und somit bleibt der Lambda-Wert des Gemisches ebenfalls unverändert.
- Der Lambda-Wert bleibt konstant, wenn sich der Gasdruck des Magergemisches nach dem Ladeluftkühler verändert. Das heißt, dass unabhängig von der Last oder Drehzahl des Motors nur die benötigte Menge an fettem Gemisch hinein gelangt (ein aktueller Wert), so dass die Verbrennung optimal ist.
- Durch Vergrößern der Differenz zwischen dem Druck der Zufuhr von reinem Kraftstoff und dem Druck des Magergemisches kann eine konstante Veränderung der Sättigung des Gemisches (des Lambda-Wertes) gewährleistet werden.

Bevorzugte Verbrennungsmotoren sind Ottomotoren (vorzugsweise Gasmotoren), insbesondere von stationärer Bauart.

Weitere Einzelheiten der Erfindung sind in einer bevorzugten Ausführungsform in den Figuren 1 bis 3 gezeigt.
Fig. 1 zeigt eine schematische Darstellung eines erfindungsgemäßen Verbrennungsmotors.
Fig. 2 zeigt eine Mischvorrichtung in Form einer Venturi-Düse in größerem schematischem Detail.
Fig. 3 zeigt ein Flussdiagramm einer Regelkreissteuerung.

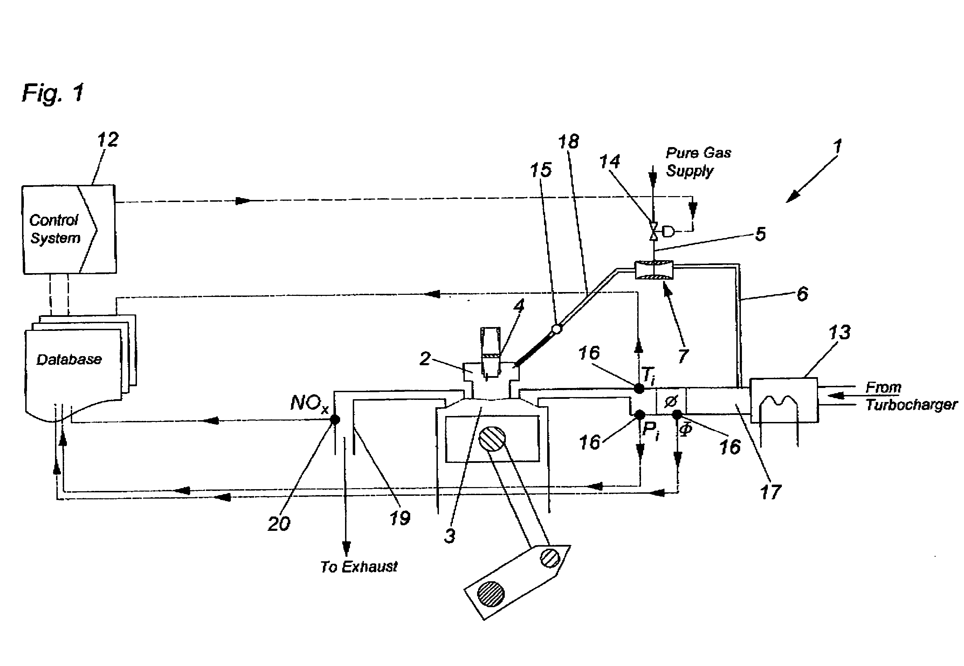

Figur 1 zeigt jene Teile eines funkengezündeten Verbrennungsmotors 1, die für die vorliegende Erfindung von Bedeutung sind. Weitere Teile des Motors 1, die dem Fachmann vertraut sind, sind nicht gezeigt.

Gezeigt ist lediglich ein einziger Hauptbrennraum 3 des Motors 1. In der Realität hat der Motor 1 mehr Kolben und damit auch mehr Brennräume 3. An den Brennraum 3 ist eine Vorkammer 2 angeschlossen. Gezeigt ist außerdem eine Funkenquelle 4. Ein mageres Kraftstoff-Luft-Gemisch wird von einem (nicht gezeigten) Turbolader in einen Ladeluftkühler 13 geleitet. Ein Teil dieses Gemisches wird über eine Leitung 17 in den Hauptbrennraum 3 geleitet. Ein weiterer Teil wird über die zweite Kraftstoffleitung 6 zu einer Mischvorrichtung 7 geleitet. Über ein Regelventil 14 (das durch das Regelsystem 12 angesteuert wird) und eine erste Kraftstoffleitung 5 wird reiner Kraftstoff in die Mischvorrichtung 7 geleitet. Das die Mischvorrichtung 7 verlassende Gemisch wird über eine Leitung 18 in die Vorkammer 2 geleitet. In dieser Leitung 18 ist ein Rückschlagventil oder Einwegventil 15 angeordnet.

Die Leitung 17 ist mit mehreren Sensoren 16 versehen, die den Druck aus dem Ansaugrohr (P₁), das Drosselklappenstellungssignal (φ) und die Temperatur aus dem Ansaugrohr (T₁) messen. In dem Auspuffrohr 19 ist ein Oₓ₋Sensor 20 angeordnet. Die gemessenen Signale werden an eine mit dem Regelsystem 12 verbundene Datenbank gesendet. Das Regelsystem 12 führt anhand der durch die Sensoren 16, 20 gelieferten Werte und der in der Datenbank gespeicherten Sollwerte eine Regelkreissteuerung des Ventils 14 durch.

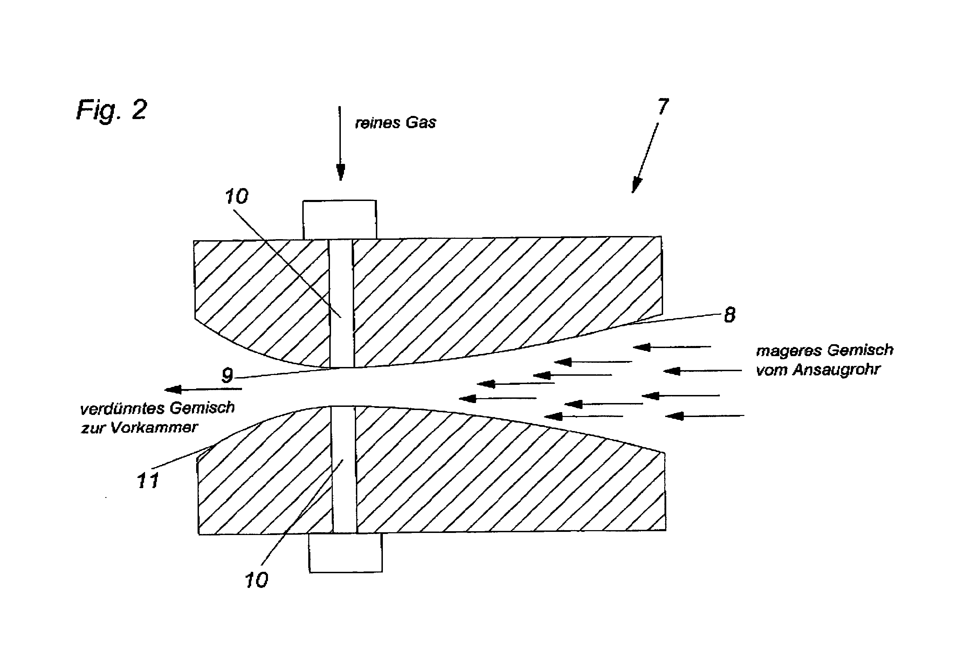

Figur 2 zeigt die Mischvorrichtung 7 in größerem Detail. In der Ausführungsform umfasst die Mischvorrichtung 7 eine Venturi-Düse. Eine Charge des Magergemisches aus dem Ansaugrohr wird in den konvergenten Abschnitt 8 der Venturi-Düse geleitet. Reiner Kraftstoff oder ein sehr fettes Kraftstoff-Luft-Gemisch wird über mehrere Löcher 9 (von denen nur zwei in Figur 2 gezeigt sind) zu dem Verengungsabschnitt 9 der Venturi-Düse geleitet- Die verdünnte Charge wird über den divergenten Abschnitt 11 der Venturi-Düse zu der Vorkammer 2 geleitet.

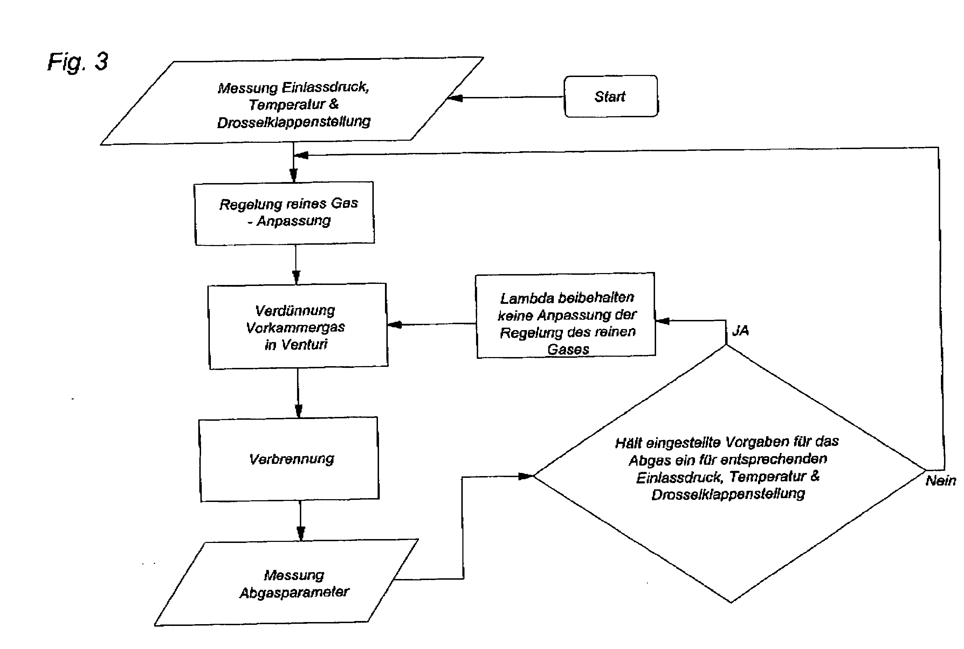

Ein mögliches Regelkreissteuerungsschema, mit dessen Hilfe die Regeleinheit 12 einen gewünschten Lambda-Wert aufrecht erhalten kann, ist in Figur 3 gezeigt. Es wird geprüft, ob die Ahgasmesswerte (zum Beispiel der durch den Sensor 20 gelieferte NOₓ-Wort) bestimmte Vorgaben (die in der Datenbank enthalten sind) einhalten. Wenn das nicht der Fall ist, so wird die Menge an reinem Kraftstoff, der über die Leitung 5 zu der Mischvorrichtung 7 geleitet wird, justiert. Weitere Steuerungsdaten werden durch die Sensoren 16 geliefert.

## Patentansprüche

1. Funkengezündeter Verbrennungsmotor (1), der Folgendes umfasst:
• mindestens eine Vorkammer (2), die mit einer Funkenquelle (4) versehen ist,
• mindestens einen Hauptbrennraum (3), der mit der mindestens einen Vorkammer (2) verbunden ist,
• eine erste Kraftstoffleitung (5), welche die mindestens eine Vorkammer (2) mit einer Quelle eines fetten Kraftstoff-Luft-Gemisches oder reinen Kraftstoffs verbindet,
wobei eine zweite Kraftstoffleitung (6) vorhanden ist, welche die mindestens eine Vorkammer (2) mit einer Quelle eines mageren Kraftstoff Luft-Gemisches verbindet, wobei die Verbindung der ersten und der zweiten Kraftstoffleitung (5, 6) mit der mindestens einen Vorkammer (2) über eine Mischvorrichtung (7) zum Mischen des mageren Kraftstoff-Luft-Gemisches und des fetten Kraftstoff-Luft-Gemisches bzw. des reinen Kraftstoffs erfolgt, **dadurch gekennzeichnet, dass** die Mischvorrichtung (7) eine Venturi-Düse umfasst, wobei ein konvergenter Abschnitt (8) der Venturi-Düse mit der zweiten Kraftstoffleitung (6) verbunden ist, wobei ein Verengungsabschnitt (9) der Venturi-Düse mit der ersten Kraftstoffleitung (5), vorzugsweise über mehrere in dem Verengungsabschnitt (9) angeordnete Löcher (10), verbunden ist und ein divergenter Abschnitt (11) der Venturi-Düse mit der Vorkammer (2) verbunden ist.

2. Verbrennungsmotor nach Anspruch 1, wobei ein Steuer- oder Regelkreissystem (12) zum Verändern der Kraftstoffmenge in der ersten Kraftstoffleitung (5) vorhanden ist.

3. Verbrennungsmotor nach Anspruch 1 oder 2, wobei die Mischvorrichtung (7) an einer Stelle unmittelbar hinter einem Ladeluftkühler (13) des Verbrennungsmotors (1) angeordnet ist.

4. Verbrennungsmotor nach einem der Ansprüche 1 bis 3, wobei die Mischvorrichtung (7) in einem Gehäuse angeordnet ist, um die Mischvorrichtung (7) zu sichern und zu halten, wobei das Gehäuse vorzugsweise das fette Kraftstoff-Luft-Gemisch bzw. den reinen Kraftstoff in einen um die Mischvorrichtung (7) herum befindlichen Ringraum kanalisiert.
